(19) **Europäisches Patentamt / European Patent Office / Office européen des brevets**

(11) **EP 2 656 101 B1**

(12) ## EUROPEAN PATENT SPECIFICATION

(45) Date of publication and mention of the grant of the patent:
**19.10.2016 Bulletin 2016/42**

(21) Application number: **11815585.2**

(22) Date of filing: **21.12.2011**

(51) Int Cl.:
*G01S 13/00* $^{(2006.01)}$

(86) International application number:
**PCT/IB2011/055877**

(87) International publication number:
**WO 2012/085868 (28.06.2012 Gazette 2012/26)**

(54) **TARGET ALTITUDE ESTIMATION BASED ON MEASUREMENTS OBTAINED BY MEANS OF A PASSIVE RADAR**

ZIELHÖHENSCHÄTZUNG AUF DER BASIS VON MESSUNGEN MIT EINEM PASSIVRADAR

ESTIMATION DE L'ALTITUDE D'UNE CIBLE SUR LA BASE DE MESURES OBTENUES AU MOYEN D'UN RADAR PASSIF

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **21.12.2010 IT TO20101034**

(43) Date of publication of application:
**30.10.2013 Bulletin 2013/44**

(73) Proprietor: **Leonardo S.p.A.**
**Roma (IT)**

(72) Inventors:
  • **BATTISTELLI, Giorgio**
    **I-00195 Roma (IT)**
  • **CHISCI, Luigi**
    **I-00195 Roma (IT)**
  • **DI LALLO, Annarita**
    **I-00195 Roma (IT)**
  • **VIGILANTE, Domenico**
    **I-00195 Roma (IT)**
  • **TIMMONERI, Luca**
    **I-00195 Roma (IT)**
  • **MORROCCHI, Stefano**
    **I-00195 Roma (IT)**

(74) Representative: **Boggio, Luigi et al**
**Studio Torta S.p.A.**
**Via Viotti, 9**
**10121 Torino (IT)**

(56) References cited:
**US-A1- 2002 053 982**

• **MARTINA DAUN ET AL: "Multistatic target tracking for non-cooperative illumination by DAB/DVB-T", RADAR CONFERENCE, 2008. RADAR '08. IEEE, IEEE, PISCATAWAY, NJ, USA, 26 May 2008 (2008-05-26), pages 1-6, XP031376334, ISBN: 978-1-4244-1538-0**
• **O'HAGAN D W ET AL: "Passive Bistatic Radar (PBR) using FM radio illuminators of opportunity", NEW TRENDS FOR ENVIRONMENTAL MONITORING USING PASSIVE SYSTEMS, 2008, IEEE, PISCATAWAY, NJ, USA, 14 October 2008 (2008-10-14), pages 1-6, XP031426383, ISBN: 978-1-4244-2815-1**
• **BANIAK J ET AL: "Silent Sentry Passive Surveillance", , 7 June 1999 (1999-06-07), pages 1-12, XP007918968, Retrieved from the Internet: URL:http://servv89pn0aj.sn.sourcedns.com/~gbpprorg/mil/radar/sentry.pdf**

**Description**

## TECHNICAL FIELD OF INVENTION

In general, the present invention concerns estimation of the altitude of a target through the use of a passive radar sensor.

In particular, the present invention relates to a method for estimating the altitude of a target on the basis of a plurality of independent bistatic range measurements and bistatic Doppler measurements, or, equivalently, of bistatic range measurements and bistatic range rate measurements, obtained by means of a passive radar sensor.

## STATE OF THE ART

As is known, a passive radar or passive radar sensor is not configured to transmit radar signals, but is configured to receive radio frequency signals (RF) present over the airwaves, which RF signals are transmitted by other transmitting and/or transceiver systems of opportunity independent of the passive radar, i.e., not controlled by the passive radar, and which may have been reflected by targets. For example, a passive radar can operate in the FM band. As is known, in nearly all the countries of the world, the FM band comprises frequencies between 88 and *108 MHz,* except for Japan, where the FM band comprises frequencies between *76* and *90 MHz,* and some Eastern European countries where the FM band comprises also, or exclusively, frequencies between 65.8 and *74 MHz.*

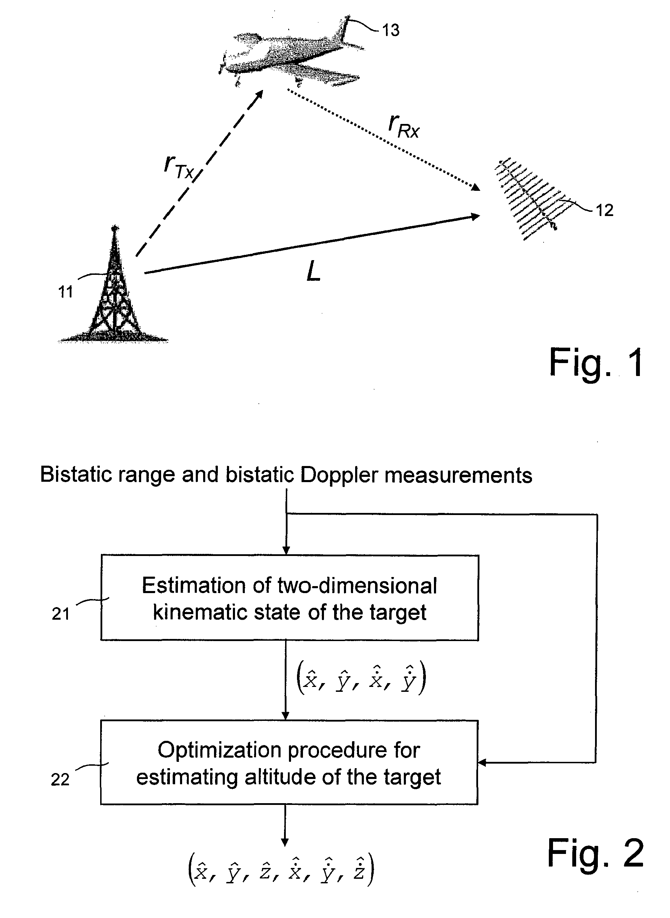

Figure 1 schematically illustrates a typical scenario in which a passive radar operates. In particular, as shown in Figure 1, a transmitter 11 transmits RF signals that can propagate directly from the transmitter 11 to a passive radar 12 located at a distance L, also called baseline, from the transmitter 11, or can propagate from the transmitter 11 to a target, for example an aircraft, 13 that is at a distance $r_{Tx}$ from the transmitter 11 and which reflects said RF signals to the passive radar 12 located at a distance $r_{RX}$ from the target 13. As previously described, the transmitter 11 is a transmitting/transceiver system of opportunity not controlled by the passive radar 12.

The passive radar 12 is able to carry out two types of measurement based on the received RF signals, namely bistatic range measurements and bistatic Doppler measurements.

Again with reference to Figure 1, the bistatic range, indicated as $r_{bis}$, can be mathematically expressed by the following relation, which represents the respective mathematical model:

$$r_{bis} = r_{Tx} + r_{Rx} - L,$$

where

- $r_{Tx} = \sqrt{(x - x_{Tx})^2 + (y - y_{Tx})^2 + (z - z_{Tx})^2}$,
- $r_{Rx} = \sqrt{x^2 + y^2 + z^2}$,
- $L = \sqrt{x_{Tx}^2 + y_{Tx}^2 + z_{Tx}^2}$,
- (x,y,z) denotes the position of the target 13,
- $(X_{Tx}, Y_{Tx}, Z_{Tx})$ denotes the position of the transmitter 11, and
- the position of the passive radar 12 is assumed to be coincident with the origin of the Cartesian reference system considered.

Furthermore, the bistatic Doppler, indicated as $f_D$, can be mathematically expressed by the following relation, which represents the respective mathematical model:

$$f_D = -\frac{1}{\lambda}\left(\frac{x\dot{x} + y\dot{y} + z\dot{z}}{\sqrt{x^2 + y^2 + z^2}} + \frac{(x - x_{Tx})\dot{x} + (y - y_{Tx})\dot{y} + (z - z_{Tx})\dot{z}}{\sqrt{(x - x_{Tx})^2 + (y - y_{Tx})^2 + (z - z_{Tx})^2}}\right)$$

where

- $\lambda$ denotes the wavelength of the RF signals transmitted by the transmitter 11 and received by the passive radar 12, and
- $(\dot{x}, \dot{y}, \dot{z})$ denotes the velocity of the target 13.

In particular, the second factor of the previously introduced mathematical model of the bistatic Doppler $f_D$ is known as the bistatic range rate $r_{bis}$, i.e., the bistatic range rate can be mathematically expressed by the following relation, which represents the respective mathematical model:

$$\dot{r}_{bis} = \left( \frac{x\,\dot{x} + y\,\dot{y} + z\,\dot{z}}{\sqrt{x^2 + y^2 + z^2}} + \frac{(x - x_{Tx})\dot{x} + (y - y_{Tx})\dot{y} + (z - z_{Tx})\dot{z}}{\sqrt{(x - x_{Tx})^2 + (y - y_{Tx})^2 + (z - z_{Tx})^2}} \right).$$

On the basis of what has been described so far, the simplest approach for estimating the altitude z of the target 13 would require, for example, the use of three independent bistatic range measurements $\hat{r}_{bis}(f_1)$, $\hat{r}_{bis}(f_2)$ and $\hat{r}_{bis}(f_3)$, i.e., obtained at three separate frequencies $f_1$, $f_2$ and $f_3$, each of which is used by a corresponding transmitter 11. In fact, assuming the positions $(x_{Tx1}, y_{Tx1}, z_{Tx1})$, $(x_{Tx2}, y_{Tx2}, z_{Tx2})$ and $(x_{Tx3}, y_{Tx3}, z_{Tx3})$ of three transmitters of opportunity 11 to be known and distinct and that each transmitter uses a respective carrier frequency different from the carrier frequencies used by the other two transmitters for transmitting, on the basis of the previously introduced mathematical model of the bistatic range $r_{bis}$ and of three independent bistatic range measurements $\hat{r}_{bis}(x_{Tx1}, y_{Tx1}, y_{Tx1})$, $\hat{r}_{bis}(x_{Tx2}, y_{Tx2}, y_{Tx2})$ and $\hat{r}_{bis}(x_{Tx3}, y_{Tx3}, y_{Tx3})$, it would be possible to obtain a system of three equations in three unknowns, namely (x, y, z) . Therefore, in this way, it would be possible to estimate the value $\hat{z}$ of the altitude z of the target 13. This approach is generally called "multilateration". However, due to the particular nature of the passive radar system, it can be demonstrated that at least four independent bistatic range measurements would be needed to render the equation solving system robust.

Unfortunately, the estimate $\hat{z}$ of the altitude z would still be very imprecise even when having four or more independent bistatic range measurements $\hat{r}_{bis}$. In fact, the errors, or rather the poor accuracy, of the bistatic range measurements $\hat{r}_{bis}$ make direct use thereof ineffective in determining the estimate z of the altitude z. In other words, the altitude z would always be very small (the maximum of the values expected for altitude z is 20 Km) with respect to x and y (the maximum of the values expected for x and y is actually *150/200 Km*) and the errors made in estimating x and y, as a result of the poor accuracy of the bistatic range measurements $\hat{r}_{bis}$, "mask" the estimated value z of the altitude z, or rather make it very inaccurate.

An indirect confirmation of the problem just described regarding the imprecision of altitude estimation due to the poor accuracy of the bistatic range measurements is provided in the paper by M. Daun and W. Koch entitled Multistatic target tracking for non-cooperative illumination by DAB/DVB-T, Radar Conference 2008, 26 May 2008, pages 1-6.

In particular, the above-mentioned paper describes a multistatic target tracking method based on measurements of signals transmitted by transmitters of opportunity of Digital Audio Broadcasting (DAB) systems and/or Digital Video Broadcasting - Terrestrial (DVB-T) systems.

In detail, said multistatic target tracking method comprises:

- a first tracking step wherein two-dimensional tracking is carried out, based on bistatic range and bistatic range rate measurements obtained on the basis of signals transmitted by DAB and/or DVB-T transmitters of opportunity;
- a second tracking step wherein two-dimensional Cartesian kinematic states of the targets are estimated by combining the results obtained in the first tracking step and resolving the problem of association between the measurements carried out and the corresponding transmitters; and
- a third tracking step wherein three-dimensional Cartesian kinematic states of the targets are estimated, even if it is not perfectly clear how this is done.

In fact, *Multistatic target tracking for non-cooperative illumination by DAB/DVB-T* does not provide any detail regarding the implementation of the third tracking step (in this connection, refer to subsection C of section III of said paper) and therefore does not enable an expert in the field to understand and consequently replicate the methodology with which the three-dimensional Cartesian kinematic states of the targets are estimated.

Furthermore, *Multistatic target tracking for non-cooperative illumination by DAB/DVB-T* expressly declares that the model used by the multistatic target tracking method described therein neglects the altitude of the targets (in this connection, refer to the second sentence of the third paragraph of subsection B in section II of said paper, and to the second sentence of the fourth paragraph of subsection B in section II of said paper), thus implicitly confirming that the poor accuracy of the bistatic range measurements renders direct utilization thereof ineffective for altitude estimation.

A further indirect confirmation of the previously described problem regarding altitude estimation imprecision due to the poor accuracy of bistatic range measurements is also provided in United States patent application US 2002/00539982 A1, which describes a system and a method of coherent passive localization for civil aviation.

In particular, US 2002/00539982 A1 describes a system that comprises:

- a receiving subsystem configured to receive first signals arriving from a transmitter of opportunity and second signals transmitted by the transmitter of opportunity and reflected by an airborne object;

- • a front-end subsystem configured to compare the received signals to determine measurement differentials; and
- • a back-end subsystem configured to determine position information concerning the object on the basis of the measurement differentials.

US 2002/00539982 A1 does not explicitly describe the object position estimation methodology implemented by the back-end subsystem, only specifying that the method described in United States patent US 5,525,995 can be adopted (in this connection, refer to the second sentence of paragraph 30 of US 2002/00539982 A1).

In particular, US 5,525,995 describes a system and a method for determining an initial two-dimensional position (in terms of Cartesian coordinates x and y) of a target on the basis of bistatic range and bistatic range rate measurements obtained by means of a bistatic radar. US 5,525,995 expressly specifies that the method for determining the initial position of a target described therein is based on the assumption that the target has a known constant altitude (in this connection, refer to column 3, lines 20-30, and to column 10, lines 5-9, of US 5,525,995), thereby implicitly confirming that the poor accuracy of the bistatic range measurements renders direct utilization thereof ineffective for altitude estimation.

## OBJECT AND SUMMARY OF THE INVENTION

Object of the present invention is therefore that of providing a method for estimating the altitude of a target on the basis of measurements obtained by means of a passive radar, which method enables the drawbacks of the previously described known techniques to be at least partially alleviated.

The above indicated object is achieved by the present invention in that it relates to a method for estimating the altitude of a target on the basis of measurements obtained by means of a passive radar sensor and a processor, radar system and software program product configured to implement said method, as defined in the appended claims.

## BRIEF DESCRIPTION OF THE DRAWINGS

For a better understanding of the present invention, some preferred embodiments, provided by way of non-limitative examples, will now be illustrated with reference to the attached drawings (not to scale), where:

- • Figure 1 schematically shows a typical operating scenario of a passive radar;
- • Figure 2 schematically shows some steps of a target altitude estimation procedure according to a first aspect of the present invention;
- • Figure 3 schematically shows a moving time window used to estimate the altitude of a target according to a further aspect of the present invention;
- • Figure 4 schematically shows some steps of a target altitude estimation procedure according to said further aspect of the present invention;
- • Figure 5 shows a graph representing target altitude estimation errors for different simulations carried out by the Applicant in order to assess the performance of the present invention; and
- • Figure 6 shows a table listing times taken, according to the present invention, for achieving an altitude estimation accuracy not higher than *1000 m.*

## DETAILED DESCRIPTION OF PREFERRED EMBODIMENTS OF THE INVENTION

The present invention will now be described in detail with reference to the attached figures to enable an expert in the field to embody it and use it. Various modifications to the described embodiments will be immediately obvious to experts in the field, and the generic principles described herein can be applied to other embodiments and applications without leaving the scope of protection of the present invention, as defined in the appended claims. Therefore, the present invention should not be considered as limited to the embodiments described and illustrated herein, but be conceded the broadest scope of protection consistent with the principles and characteristics described and claimed herein.

The present invention originates from the Applicant's intuition of simultaneously exploiting bistatic range measurements and bistatic Doppler measurements, or, equivalently, bistatic range measurements and bistatic range rate measurements, obtained by means of a passive radar sensor in order to estimate the altitude of a target.

In particular, the Applicant has noted that bistatic Doppler measurements $\hat{f}_D$ are much more precise than bistatic range measurements $\hat{r}_{bis}$. Simplifying things, the expected level of precision can be assumed as proportional to the resolution. Resolution is equal to the inverse of the observation time and is therefore approximately *1 Hz;* assuming a uniform distribution of the quantization error, the precision is therefore approximately equal to $1/\sqrt{12} = 0.28\ Hz$ (where $Q / \sqrt{12}$ represents the standard deviation of the uniform distribution assumed for the quantization error $Q$). Estimation techniques can bring this value to around *0.1 Hz* (result verified by means of Monte Carlo simulations). The mathematical model of the bistatic Doppler $f_D$ internally comprises the altitude $z$, combined however in a non-linear manner with the other coordinates $x$ and $y$ of the target, the velocity ($\dot{x}, \dot{y}, \dot{z}$) of the target and the position ($x_{TX}, y_{TX}, z_{TX}$) of the transmitter or transmitters of opportunity, as measurements with different frequencies are generally used and therefore potentially based on RF signals broadcasted by various transmitters of opportunity not necessarily co-located.

Specifically, a method for estimating the altitude of a target according to a first aspect of the present invention preferably comprises the following steps:

a) detecting one or more targets on the basis of RF signals received by a passive radar and transmitted by at least three transmitters of opportunity (i.e., not controlled by the passive radar), each of which transmits using a respective carrier frequency different from the carrier frequencies used by the other transmitters, and, for each detected target, carrying out respective bistatic range and bistatic Doppler measurements, each measurement being related to a corresponding carrier frequency;
b) for each carrier frequency, filtering the corresponding bistatic range and bistatic Doppler measurements with a corresponding Kalman filter;
c) for each detected target, identifying and associating the filtered bistatic range and bistatic Doppler measurements that correspond to said target;
d) for each detected target, estimating, on the basis of the corresponding bistatic range and bistatic Doppler measurements filtered with the Kalman filters, a corresponding two-dimensional kinematic state that comprises an estimated two-dimensional position ($\hat{x}, \hat{y}$) and an estimated two-dimensional velocity ($\hat{\dot{X}}, \hat{\dot{Y}}$) of the target; and
e) for each detected target, finding the minimum of a functional representing the statistical distance between the corresponding bistatic Doppler measurements and the previously introduced mathematical model of the bistatic Doppler so as to estimate a value z for the altitude z of the target and a value $\hat{\dot{z}}$ for the elevation component $\dot{z}$ of the velocity of the target.

Preferably, searching for the minimum of said functional in the step e) requires a start point that is represented by the estimated two-dimensional kinematic state and, preferably, also by assumptions on the maximum permissible velocities for the targets of interest.

Even more preferably, the step e) comprises finding the position and velocity values of the detected target that minimize, in the sense of least squares, the following error:

$$\hat{f}_D - \frac{1}{\lambda}\left( \frac{x\,\dot{x} + y\,\dot{y} + z\,\dot{z}}{\sqrt{x^2 + y^2 + z^2}} + \frac{(x - x_{Tx})\dot{x} + (y - y_{Tx})\dot{y} + (z - z_{Tx})\dot{z}}{\sqrt{(x - x_{Tx})^2 + (y - y_{Tx})^2 + (z - z_{Tx})^2}} \right)$$

where $\hat{f}_D$ indicates a bistatic Doppler measurement corresponding to the detected target considered.

In addition, the step d) can conveniently include:

d1) for each detected target, applying the multilateration technique to the corresponding bistatic range measurements filtered with the Kalman filters so as to estimate a two-dimensional position ($\hat{x}, \hat{y}$) of the target, in particular defined by two coordinates expressed in a Cartesian reference system (while the estimated altitude z, i.e. the third Cartesian coordinate, obtained thanks to multilateration is not used because, as previously described, it is inaccurate); and,
d2) for each detected target, use a Cartesian tracker to estimate, on the basis of the corresponding bistatic range and bistatic Doppler measurements and of the corresponding estimated two-dimensional position, a corresponding two-dimensional kinematic state comprising, in addition to the estimated two-dimensional position ($\hat{x}, \hat{y}$), also an estimated two-dimensional velocity ($\hat{\dot{x}}, \hat{\dot{y}}$) of the target, in particular defined by two components expressed in the Cartesian reference system (while the estimated elevation component $\hat{\dot{z}}$ of the velocity, i.e. the third component of the velocity, obtained thanks to the Cartesian tracker is not used as it is inaccurate).

Again conveniently, the step d) can also include filtering of the estimated two-dimensional kinematic state so as to remove any errors introduced by the use of multilateration and by measurement noise.

Figure 2 shows a flowchart that summarizes the previously described steps d) and e).

In particular, Figure 2 schematically shows:

d) an estimation of a two-dimensional kinematic state of a target (block 21) obtained by means of a processing of bistatic range and bistatic Doppler measurements, that have been obtained on the basis of RF signals received by a passive radar and transmitted by at least three transmitters of opportunity, each of which transmits using a respective carrier frequency different from the carrier frequencies used by the other transmitters (step a), that have been filtered with corresponding Kalman filters (step b), and that correspond to said target (step c); and

e) an optimization procedure (block 22) that enables a value $\hat{z}$ for the altitude $z$ of the target and a $\hat{\dot{z}}$ for the elevation component $\dot{z}$ of the velocity of the target to be estimated on the basis of the estimated two-dimensional kinematic state of the target and of the bistatic range and bistatic Doppler measurements.

Preferably, the carrier frequencies used by the transmitters of opportunity are within the FM band. Conveniently, the transmitters are not co-located, i.e., each transmitter occupies a respective position that is different from the positions occupied by the other transmitters.

However, it is wished to underline the fact that for the purposes of the present invention, the bistatic Doppler measurements could be conveniently substituted by corresponding bistatic range rate measurements, which, as previously described, are equivalent to the bistatic Doppler measurements except for a factor that depends on the wavelength considered, i.e., on the carrier frequency considered.

In addition, according to a further aspect of the present invention, a preferred embodiment of the previously described target altitude estimation method enables achieving an acceptable compromise, in terms of processing time and processing resources employed, between altitude estimation precision and processing capabilities necessary for estimating the altitude.

In particular, said further aspect of the present invention concerns a method based on a generalized least squares approach in which the estimates of the position $(\hat{x}, \hat{y}, \hat{z})$ and velocity $(\hat{\dot{x}}, \hat{\dot{Y}}, \hat{\dot{Z}})$ values of the target are obtained by minimizing a cost functional representative of the statistical distance between the bistatic range and bistatic Doppler measurements, or, equivalently, between the bistatic range and bistatic range rate measurements, and the previously introduced mathematical models of the bistatic range and bistatic Doppler, or bistatic range rate.

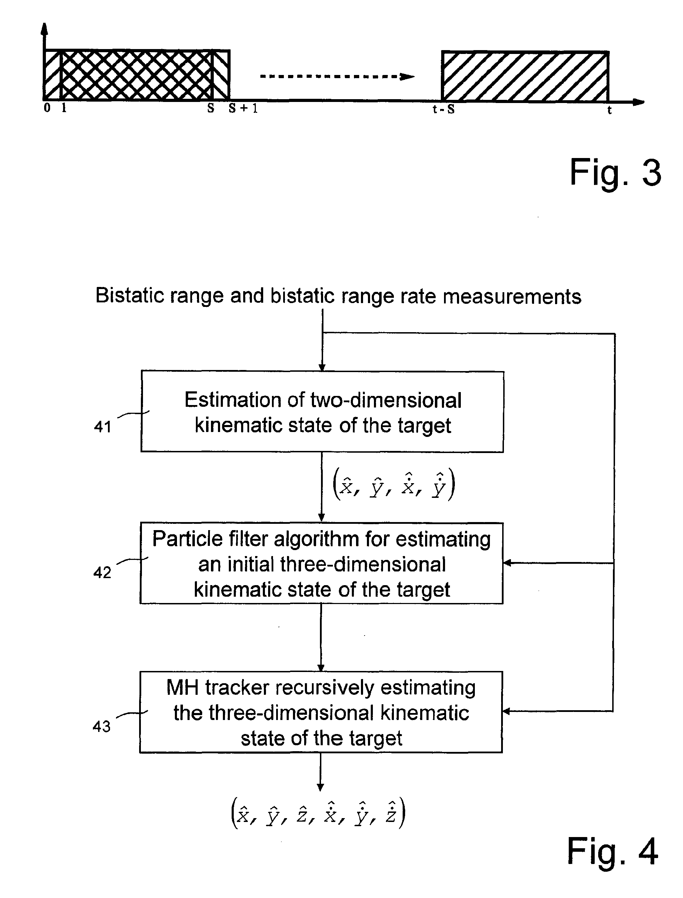

Furthermore, as the size of the optimization problem grows over time as the number of available measurements increases, in order to achieve an acceptable compromise between altitude estimation precision and the processing capabilities necessary for estimating the altitude, the method according to said further aspect of the present invention exploits a moving horizon (MH) approach, i.e., it only uses information regarding the "most recent past" to estimate the altitude of a target. In consequence, the cost functional to be minimized is defined in a moving window including a finite number of time stages. With regard to this, Figure 3 schematically shows a moving time window having a predefined duration $S$.

In detail, the cost functional comprises two main contributions: a statistical measurement of the prediction error on the last measurements and an arrival cost that penalizes the distance of the estimate of the state at the beginning of the moving window from the corresponding estimate obtained in the previous time instant. The introduction of the arrival cost allows to make the estimate calculation recursive and therefore to implicitly take the measurements obtained in the less recent time instants into account as well, even if these do not explicitly appear in the cost functional. At the time instant in which minimization of the cost functional is performed for the first time, it is necessary to carry out an initialization procedure to determine an initial estimate that permits the first arrival cost to be defined. In addition, the moving horizon (MH) estimation method according to said further aspect of the present invention enables any available a priori information on the kinematic state of the target (for example, upper limits on velocity and/or altitude) to be explicitly taken into consideration through the introduction of opportune constraints in the optimization problem.

Going into still further detail, the MH estimation method preferably comprises the previously described steps a), b), c) and d) and two steps, namely e1) and e2), which constitute a preferred implementation of the previously described step e).

More specifically, the MH estimation method comprises:

a) detecting one or more targets on the basis of RF signals received by a passive radar and transmitted by at least three transmitters of opportunity (preferably not co-located), each of which transmits using a respective carrier frequency (preferably within the FM waveband) different from the carrier frequencies used by the other transmitters and, for each detected target, carrying out respective bistatic range and bistatic range rate measurements, each measurement being related to a corresponding carrier frequency;

b) for each carrier frequency, filtering the corresponding bistatic range and bistatic range rate measurements with a corresponding Kalman filter;

c) for each detected target, identifying and associating the filtered bistatic range and bistatic range rate measurements that correspond to said target;

d) for each detected target, estimating, on the basis of the corresponding bistatic range and bistatic Doppler measurements filtered with the Kalman filters, a corresponding two-dimensional kinematic state that comprises an estimated two-dimensional position and an estimated two-dimensional velocity of the target;

e1) for each detected target, applying a procedure, based on the Monte Carlo method and known as a "particle filter" algorithm, to the corresponding two-dimensional kinematic state so as to estimate a corresponding initial three-dimensional kinematic state comprising an estimated initial three-dimensional position and an estimated initial three-dimensional velocity of the target; and

e2) for each detected target, carrying out a moving horizon (MH) estimation for recursively estimating the corresponding three-dimensional kinematic state.

Furthermore, the step d) of the MH estimation method can also conveniently include the application of a conventional multilateration and the use of a conventional Cartesian tracker.

Figure 4 shows a flowchart that summarizes the previously described steps d), e1) and e2).

In particular, Figure 4 schematically shows:

d) an estimation of the two-dimensional kinematic state of the target (block 41) on the basis of the corresponding bistatic range and bistatic range rate measurements (block 41) ;

e1) an application of the "particle filter" algorithm to the estimated two-dimensional kinematic state of the target and to the bistatic range and bistatic range rate measurements so as to estimate an initial three-dimensional kinematic state of the target comprising an estimated initial three-dimensional position and an estimated initial three-dimensional velocity of the target (block 42); and

e2) a use of a moving horizon (MH) tracker for recursively estimating the three-dimensional kinematic state of the target (block 43).

In detail, the MH estimation (block 43) operates, at a generic time instant t, in a moving time frame $[t - S, t]$ of predetermined duration, or span, S. More precisely, at instant t, given the estimated three-dimensional kinematic state $\hat{X}_{t-S|t-1}$ resulting from processing in the previous instant, the three-dimensional kinematic states $\hat{X}_{i|t}$ $(i = t - S, \ldots , t)$ inside the frame $[t - S, t]$ are estimated by means of MH estimation (block 43) so as to minimize an opportune performance index, or cost functional, $J$ that has the following form:

$$
J = \sum_{i=t-S}^{t} \left\| Y_i - h\left(\hat{X}_{i|t}\right) \right\|_{R^{-1}}^{2} +
$$

$$
+ \sum_{i=t-S+1}^{t} \left\| \hat{X}_{i|t} - f\left(\hat{X}_{i-1|t}\right) \right\|_{Q^{-1}}^{2} +
$$

$$
+ \left\| \hat{X}_{t-S|t} - \hat{X}_{t-S|t-1} \right\|_{P^{-1}}^{2} ,
$$

where

- $\left\| n \right\|_{K}^{2} \equiv n' K n$ denotes the square of the norm of vector-argument $n$ weighted by the weighting-matrix $K = K' > 0$;

- $Y_t$ denotes a vector containing all of the bistatic range and bistatic range rate measurements associated with the target at time $t$;

- $\hat{X}_t$ denotes a vector that represents the estimated three-dimensional kinematic state of the target at time $t$ and which comprises an estimated three-dimensional position and an estimated three-dimensional velocity of the target at time $t$;

- $f(\cdot)$ denotes a function that models the motion of the target such that $\hat{X}_{t+1} - f(\hat{X}_t) + w_t$, where $w_t$ indicates the error of the motion model;

- $h(\cdot)$ denotes a function that relates the vector $\hat{X}_t$ (which represents the estimated three-dimensional kinematic state of the target) and the vector $Y_t$ (containing all the bistatic range and bistatic range rate measurements associated with the target) such that $Y_t = h(\hat{X}_t) + e_t$, where $e_t$ indicates the measurement error; and

- $R = R' > 0$, $Q = Q' > 0$ and $P = P' > 0$ denote weighting-matrices that respectively penalise the measurement errors, the motion model errors and the error on the initial three-dimensional kinematic state.

On the basis of what has just been described, the performance index $J$ comprises three contributions, specifically:

- a first contribution that is related to the measurement model in general and to the measurement error in particular, and which is represented by

$$\sum_{i=t-S}^{t} \left\| Y_i \; - \; h\!\left(\hat{X}_{i|t}\right) \right\|_{R^{-1}}^{2} \; ;$$

- a second contribution that is related to the motion model in general and to the motion model error in particular, and which is represented by

$$\sum_{i=t-S+1}^{t} \left\| \hat{X}_{i|t} \; - \; f\!\left(\hat{X}_{i-1|t}\right) \right\|_{Q^{-1}}^{2} \; ;$$

and

- a third contribution that is related to the distance between the current estimate of the kinematic state and the previous estimate of the kinematic state in general and to the estimation error in particular, and which is represented by

$$\left\| \hat{X}_{t-S|t} \; - \; \hat{X}_{t-S|t-1} \right\|_{P^{-1}}^{2} \; .$$

In particular, the third contribution represents the previously described arrival cost of the cost functional, while the sum of the first two contributions represents the previously described statistical measurement of the prediction error on the last measurements.

Furthermore, the minimization of the non-linear cost functional $J$ must be carried out at each time instant $t=S$, $S+1$, ... assuming $\hat{X}_{t-S|t-1}$ to be a known quantity. To that end, at time instants $t=S+1$, $S+2$, ..., the vector $\hat{X}_{t-S|t-1}$ is obtained from the solution to the problem in the previous time instant, while for instant $t=S$, i.e. the time instant in which minimization of the cost functional $J$ is carried out for the first time, it is necessary to perform an initialization procedure to determine vector $\hat{X}_{0|S-1}$. As previously described, a Monte Carlo filtering method known as a "particle filter" is used for this purpose (block 42 in Figure 4).

In particular, in order to initialize $\hat{X}_{0|S-1}$ for the first minimization of the cost functional $J$ at instant $t=S$, it is possible to proceed as described in detail hereunder.

First of all, the Monte Carlo filtering method, known as a "particle filter" (block 42 in Figure 4), comprises the generation of $N_p$ particles, each of which is constituted by a three-dimensional kinematic state $X^i$ and a weight $w^i$. For each particle, the three-dimensional kinematic state is generated according to the following procedure:

- are generated two components, specifically $x$ and $y$, of the two-dimensional position of the target and two components, specifically $\dot{x}$ and $\dot{y}$, of the two-dimensional velocity of the target, with a Gaussian distribution around the corresponding estimates contained in the two-dimensional kinematic state estimated in step d) (block 41 in Figure 4);
- an altitude component $z$ of the target and an elevation component $\dot{z}$ of the velocity of the target are generated that have a uniform distribution within the permitted limits for these quantities, said limits being (considered as) known a priori.

Subsequently, the weight for each particle is generated according to the relation:

$$w^i \; = \; \ell\!\left(X^i \; | \; Y_0\right),$$

where $\ell(X\,|\,Y)$ denotes a function that models the likelihood of state $X$ with respect to the measurement vector $Y$.

Finally, the desired initial estimate is calculated as

$$\hat{X}_{0|S-1} \; = \; \sum_{i=1}^{N_P} w^i X^i \; \Big/ \sum_{i=1}^{N_P} w^i \; .$$

The Applicant has, however, carried out very thorough research aimed at investigating and assessing the performance of the target altitude estimation method according to the present invention.

For example, in order to assess the performance of the above-mentioned method, the motion of a target at an almost constant velocity has been simulated by means of the model $X_t+_1 = AX_t + w_t$, with

- kinematic state $X = [x, \dot{x}, y, \dot{y}, z, \dot{z}]$;
- white process noise $w_t$, with null mean and variance $Q = diag\{20, 10, 20, 10, 2, \}^2$;
- transition matrix A defined as

$$A = \begin{bmatrix} 1 & T & 0 & 0 & 0 & 0 \\ 0 & 1 & 0 & 0 & 0 & 0 \\ 0 & 0 & 1 & T & 0 & 0 \\ 0 & 0 & 0 & 1 & 0 & 0 \\ 0 & 0 & 0 & 0 & 1 & T \\ 0 & 0 & 0 & 0 & 0 & 1 \end{bmatrix} \qquad ;$$

- true initial state $X_0 = [75km - 200m / s\ 0km - 100m / s\ 6km\ 0m / s]$; and
- sampling time $T = 1.5\ s$.

The passive radar considered for this simulation was able to measure four triplets of bistatic range and range rate, with regard to four transmitters of opportunity arranged in the vicinity of the passive radar, which was positioned at the origin of the Cartesian reference system considered. In particular, the coordinates $(x_{Tx}, y_{Tx}, z_{Tx})$ of the four transmitters are indicated in the columns of the following matrix:

$$T_x = \begin{bmatrix} 30 & 40 & -30 & 40 \\ -10 & 20 & -30 & -20 \\ 0.1 & 0.5 & 0.25 & 0.01 \end{bmatrix} (km).$$

In addition, with regard to measurement noise, a fixed value $\sigma_r = 500\ m$ was assumed for the standard deviation of the bistatic range measurements and four different values (*0.2, 0.5, 1* and *3 m/s*) for the standard deviation $\sigma_{\dot{r}}$ of the bistatic range rate measurements. The results of the simulation provided below refer to *200* Monte Carlo tests regarding measurement-noise-independent instances.

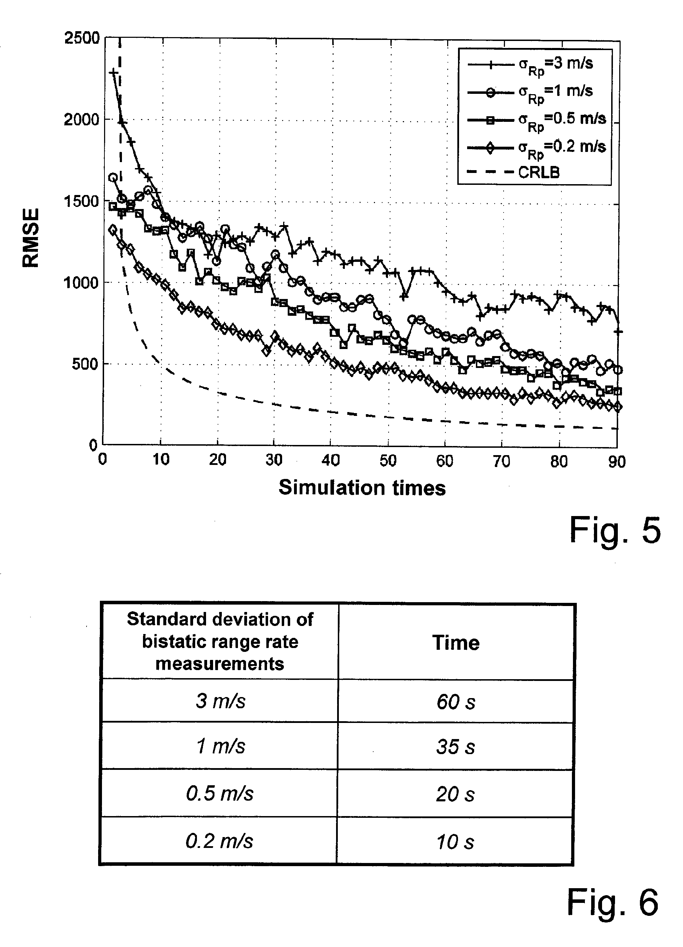

In the tests carried out, the MH estimation algorithm (block 43 in Figure 4) uses a moving frame, i.e., window, of span *S=1*, as larger frames increase the calculation time for resolving the optimization problem. The standard deviation of the altitude estimation error (RMSE) is shown in Figure 5, which also shows, for comparison, the theoretical limit (PCRLB) below which it cannot drop in the case where $\sigma_{\dot{r}} = 3m/s$.

In conclusion, the present invention described in the foregoing enables estimating the altitude of a target by simultaneously exploiting the bistatic range and bistatic Doppler measurements, or, equivalently, the bistatic range and bistatic range rate measurements, provided by a passive radar or sensor and related to one and the same target illuminated by signals transmitted by a plurality of transmitters of opportunity, preferably operating in the FM band and conveniently not co-located.

The main innovations of the present invention with respect to the known art are the following:

- the use of only bistatic range and bistatic Doppler measurements, or, equivalently, bistatic range and bistatic range rate measurements, without the need of having to resort to interferometric techniques for measuring/estimating the angle of elevation; and
- the use of non-recursive (batch) or moving-frame recursive optimization methods, instead of the multilateration techniques commonly used for target localization.

From the foregoing description, the advantages of the present invention can be immediately understood.

In particular, also in the light of the results of the previously described simulations carried out by the Applicant, it is important to underline the fact that by means of the present invention it is possible to reasonably estimate, i.e., with errors of the order of hundreds of metres, the altitude of a target. In fact, in order to estimate the altitude of a target, the present invention, although using bistatic range measurements that, as previously stated, are not very accurate, i.e., of the order of several hundreds of metres, simultaneously uses the bistatic Doppler measurements as well, i.e., the bistatic range rate, which instead are much more accurate, i.e., with a standard deviation of the order of tens of metres per second. For this reason, the moving horizon (MH) estimator (block 43 in Figure 4) is able to provide excellent results in terms of both rapidity in convergence and normal performance. In this connection, Figure 6 shows a table listing the times taken to obtain an altitude estimation accuracy of within *1000 m.*

In detail, the present invention is found to be particularly advantageous when the accuracy of the bistatic range measurements is above *500 m,* as, for example, in the case of bistatic range measurements regarding frequencies within the FM band.

Furthermore, it is important to also underline the fact that the present invention can be advantageously, but not exclusively, exploited with passive radars operating in the FM band that do not have interferometric measurement of altitude, such as, for example, the apparatuses equipped with a single "loop" circular antenna.

Finally, it is understood that various modifications can be made to the present invention, all falling within the scope of protection of the invention defined in the appended claims.

**Claims**

1.  A method for estimating the altitude of a target (13) comprising:

    • acquiring first quantities indicative of bistatic range measurements associated with a target (13) and carried out on the basis of radio frequency signals received by a passive radar sensor (12) and transmitted by at least three transmitters of opportunity (11);
    • acquiring second quantities indicative of bistatic range rate measurements associated with the target (13) and carried out on the basis of said radio frequency signals received by the passive radar sensor (12) and transmitted by the at least three transmitters of opportunity (11) ;
    • estimating a two-dimensional kinematic state of the target (13) on the basis of the first and the second quantities, said two-dimensional kinematic state including

        - a two-dimensional position of the target (13) defined by two coordinates expressed in a polar reference system in terms of range and azimuth, or in a corresponding Cartesian reference system, and
        - a two-dimensional velocity of the target (13) defined by two components expressed in the polar reference system in terms of range and azimuth, or in the corresponding Cartesian reference system; and

    • estimating a three-dimensional kinematic state including the altitude and the elevation component of the velocity of the target (13) on the basis of the two-dimensional kinematic state of the target (13) and of the first and the second quantities, said three-dimensional kinematic state comprising

        - a three-dimensional position of the target (13) defined by three coordinates expressed in the polar reference system, or in the corresponding Cartesian reference system, and
        - a three-dimensional velocity of the target (13) defined by three components expressed in the polar reference system, or in the corresponding Cartesian reference system;

    <u>**characterized in that**</u>:

    • each of the at least three transmitters of opportunity (11) transmits using a respective carrier frequency which is within the FM band and is different from the carrier frequencies used by the other transmitters of opportunity (11); and
    • the three-dimensional kinematic state of the target (13) is estimated so as to minimize a functional related to at least the second quantities;

    wherein said functional is representative of a statistical distance between a mathematical model of the bistatic range rate and the second quantities, or is a cost functional that comprises:

    • a first contribution indicative of an error of a measurement model at a current time instant and at time instants prior to said current time instant and included in a time window having a predetermined duration;
    • a second contribution indicative of an error of a motion model at the current time instant and at time instants prior to said current time instant and included in said time window; and
• a third contribution indicative of an estimation error related to a distance between the three-dimensional kinematic state of the target (13) at the first time instant included in said time window and the three-dimensional kinematic state of the target (13) at a time instant prior to said first time instant included in said time window;

wherein the measurement model relates the three-dimensional kinematic state of the target (13) at a generic time instant and the first and second quantities at the same generic time instant;
and wherein the motion model relates the three-dimensional kinematic state of the target (13) at a generic time instant and the three-dimensional kinematic state of the target (13) at a time instant prior to said generic time instant.

2. The method of claim 1, wherein said cost functional comprises an addition of the first contribution, the second contribution and the third contribution.

3. The method according to claim 1 or 2, wherein estimating a three-dimensional kinematic state of the target (13) comprises recursively estimating a three-dimensional state of the target (13) at a current time instant so as to minimize said cost functional.

4. The method according to any claim 1-3, further comprising:

• performing a particle filter method on the basis of the two-dimensional kinematic state of the target (13) and of the first and the second quantities so as to estimate an initial three-dimensional kinematic state of the target (13), which comprises an initial position of the target (13) defined by three coordinates expressed in the polar reference system, or in the corresponding Cartesian reference system, and an initial velocity of the target (13) defined by three components expressed in the polar reference system, or in the corresponding Cartesian reference system;

and wherein the first estimation error used for estimating the three-dimensional kinematic state of the target (13) is determined on the basis of the estimated initial three-dimensional kinematic state.

5. The method according to any preceding claim, wherein the functional is minimized by means of a least squares method.

6. The method according to any preceding claim, further comprising:

• filtering, with a Kalman filter, the bistatic range measurements associated with the target (13) and carried out on the basis of the radio frequency signals received by the passive radar sensor (12) and transmitted by the at least three transmitters of opportunity (11), thereby obtaining the first quantities; and
• filtering, with a Kalman filter, the bistatic range rate measurements associated with the target (13) and carried out on the basis of the radio frequency signals received by the passive radar sensor (12) and transmitted by the at least three transmitters of opportunity (11), thereby obtaining the second quantities;

and wherein estimating a two-dimensional kinematic state of the target (13) comprises:

• applying a multilateration technique to the first quantities so as to determine position information concerning the target (13) ; and
• applying a tracking technique to the position information and to the first and the second quantities so as to estimate the two-dimensional kinematic state of the target (13).

7. The method according to any preceding claim, wherein each transmitter of opportunity (11) occupies a respective position that is different from the positions of the other transmitters of opportunity (11).

8. A processor configured to implement the method claimed in any preceding claim.

9. A radar system comprising a processor and at least one passive radar sensor mutually coupled, said processor being configured to implement the method claimed in any claim 1-7.

10. A software program product comprising software code portions loadable into a memory of a processor, executable by said processor, and such as to cause, when executed, said processor to become configured to implement the method claimed in any claim 1-7.

**Patentansprüche**

1.  Ein Verfahren zum Schätzen der Höhe eines Ziels (5), wobei das Verfahren die folgenden Schritte aufweist:

    Erfassen von ersten Größen, die anzeigend sind für bi-statische Entfernungsmessungen, die mit einem Ziel (13) assoziiert sind und die auf der Basis von Funkfrequenzsignalen ausgeführt werden, die von einem passiven Radarsensor (12) empfangen werden, und die von wenigstens drei verfügbaren Sendern (11) gesendet werden;
    Erfassen von zweiten Größen, die anzeigend sind für bi-statische Entfernungsmessungen, die mit dem Ziel (13) assoziiert sind und die auf der Basis der Funkfrequenzsignale ausgeführt werden, die von dem passiven Radarsensor (12) empfangen werden, und die von den wenigstens drei verfügbaren Sendern (11) gesendet werden;
    Schätzen eines zweidimensionalen kinematischen Zustands des Ziels (13) auf der Basis der ersten und der zweiten Größen, wobei der zweidimensionale kinematische Zustand Folgendes aufweist:

    - eine zweidimensionale Position des Ziels (13), die definiert ist durch zwei Koordinaten, die in einem Polar Referenzsystem in Größen von Entfernung und Azimut ausgedrückt werden, oder in einem entsprechenden kartesischen Referenzsystem, und
    - eine zweidimensionale Geschwindigkeit des Ziels (13), die durch zwei Komponenten definiert ist, die in dem Polar Referenzsystem in Größen von Entfernung und Azimut ausgedrückt werden, oder in dem entsprechenden kartesischen Referenzsystem; und

    Schätzen eines dreidimensionalen kinematischen Zustands, wobei der dreidimensionale kinematische Zustand die Höhen- und die Elevationskomponente der Geschwindigkeit des Ziels (13) aufweist, auf der Basis des zweidimensionalen kinematischen Zustands des Ziels (13) und den ersten und zweiten Größen, wobei der dreidimensionale kinematische Zustand Folgendes aufweist:

    - eine dreidimensionale Position des Ziels (13), die definiert ist durch drei Koordinaten, die in dem Polar Referenzsystem ausgedrückt werden, oder in dem entsprechenden kartesischen Referenzsystem, und
    - eine dreidimensionale Geschwindigkeit des Ziels (13), die durch drei Komponenten definiert ist, die in dem Polar Referenzsystem ausgedrückt werden, oder in dem entsprechenden kartesischen Referenzsystem ;

    **dadurch gekennzeichnet, dass**:

    - jeder der wenigstens drei verfügbaren Sender (11) unter der Verwendung einer entsprechenden Trägerfrequenz sendet, die innerhalb des FM Bandes liegt und die unterschiedlich ist zu den Trägerfrequenzen, die von den anderen verfügbaren Sendern (11) verwendet werden; und
    - der dreidimensionale kinematische Zustand des Ziels (13) geschätzt wird, um ein Funktional, das mit den zweiten Größen zusammenhängt, zu minimieren;

    wobei das Funktional eine statische Entfernung zwischen einem mathematischen Modell der bi-statischen Entfernungsrate und den zweiten Größen repräsentiert, oder wobei das Funktional ein Kostenfunktional ist, das Folgendes aufweist:

    - einen ersten Beitrag, der anzeigend für einen Fehler eines Messmodells zu einem aktuellen Zeitpunkt ist und zu Zeitpunkten, die vor dem aktuellen Zeitpunkt liegen und die in einem Zeitfenster liegen, das eine vorbestimmte Dauer aufweist;
    - einen zweiten Beitrag, der anzeigend für einen Fehler eines Bewegungsmodells zu dem aktuellen Zeitpunkt ist und zu Zeitpunkten, die vor dem aktuellen Zeitpunkt liegen und die in dem Zeitfenster enthalten sind; und
    - einen dritten Beitrag, der anzeigend ist für einen Schätzungsfehler, der auf eine Entfernung bezogen ist zwischen dem dreidimensionalen kinematischen Zustand des Ziels (13) zu dem ersten Zeitpunkt, der in dem Zeitfenster enthalten ist und dem dreidimensionalen kinematischen Zustand des Ziels (13) zu einem Zeitpunkt vor dem ersten Zeitpunkt, der in dem Zeitfenster enthalten ist;

    wobei das Messmodell den dreidimensionalen kinematischen Zustand des Ziels (13), zu einem generischen Zeitpunkt und den ersten und zweiten Größen zum gleichen generischen Zeitpunkt zuordnet;
und wobei das Bewegungsmodell den dreidimensionalen kinematischen Zustand des Ziels (13), zu einem generischen Zeitpunkt, dem dreidimensionalen kinematischen Zustand des Ziels (13), zu einem Zeitpunkt, der vor dem generischen Zeitpunkt liegt, zuordnet.

2. Das Verfahren nach Anspruch 1, wobei das Kostenfunktional eine Addition des ersten Beitrags, des zweiten Beitrags und des dritten Beitrags aufweist.

3. Das Verfahren nach Anspruch 1 oder 2, wobei das Schätzen eines dreidimensionalen kinematischen Zustands des Ziels (13), ein rekursives Schätzen eines dreidimensionalen Zustands des Ziels (13) zu einem aktuellen Zeitpunkt aufweist, um das Kostenfunktional zu minimieren.

4. Das Verfahren nach einem der Ansprüche 1 bis 3, wobei das Verfahren ferner folgende Schritte aufweist:

   - Ausführen eines Partikelfilterverfahrens auf der Basis des zweidimensionalen kinematischen Zustands des Ziels (13) und der ersten und zweiten Größen, um einen initialen dreidimensionalen kinematischen Zustand des Ziels (13) zu schätzen, welcher eine initiale Position des Ziels (13) aufweist, die durch drei Koordinaten in dem Polar Referenzsystem ausgedrückt werden, oder in dem entsprechenden kartesischen Koordinatensystem, und eine initiale Geschwindigkeit des Ziels (13) zu schätzen, die definiert ist durch drei Komponenten, die in dem Polar Referenzsystem ausgedrückt werden, oder in dem entsprechenden kartesischen Koordinatensystem;

   und wobei der erste Schätzfehler, der für die Schätzung des dreidimensionalen Zustands des Ziels (13) verwendet wird, auf der Basis des geschätzten initialen dreidimensionalen kinematischen Zustands bestimmt wird.

5. Das Verfahren nach einem der vorhergehenden Ansprüche, wobei das Funktional minimiert wird, mittels einer Methode der kleinsten Quadrate.

6. Das Verfahren nach einem der vorhergehenden Ansprüche, wobei das Verfahren ferner folgende Schritte aufweist:

   Filtern, mittels eines Kalman Filters, der bi-statischen Entfernungsmessungen, die mit dem Ziel (13) assoziiert sind und die ausgeführt werden auf der Basis der Funkfrequenzsignale, die mittels des passiven Radarsensors (12) empfangen werden und die mit den wenigstens drei verfügbaren Sendern (11) gesendet werden, wodurch die ersten Größen erhalten werden; und
   Filtern, mittels eines Kalman Filters, der bi-statischen Entfernungsmessungen, die mit dem Ziel (13) assoziiert sind und die ausgeführt werden auf der Basis der Funkfrequenzsignale, die mittels des passiven Radarsensors (12) empfangen werden und die mit den wenigstens drei verfügbaren Sendern (11) gesendet werden, wodurch die zweiten Größen erhalten werden;

   und wobei das Schätzen eines zweidimensionalen kinematischen Zustands des Ziels (13) ferner folgende Schritte aufweist:

   - Anwenden einer Multilaterationstechnik auf die ersten Größen, um Positionsinformation bezüglich des Ziels (13) zu bestimmen; und
   - Anwenden einer Trackingtechnik auf die Positionsinformation und auf die ersten und zweiten Größen, um den zweidimensionalen kinematischen Zustand des Ziels (13) zu schätzen.

7. Das Verfahren nach einem der vorhergehenden Ansprüche, wobei jeder verfügbare Sender (11) eine entsprechende Position einnimmt, die unterschiedlich ist von den Positionen der anderen verfügbaren Sender (11).

8. Ein Prozessor, der konfiguriert ist, das Verfahren nach einem der vorhergehenden Ansprüche zu implementieren.

9. Ein Radarsystem, wobei das Radarsystem einen Prozessor und wenigstens einen passiven Radarsensor aufweist, die miteinander verbunden sind, wobei der Prozessor konfiguriert ist, das Verfahren nach einem der Ansprüche 1 bis 7 zu implementieren.

10. Ein Softwareprogrammprodukt, wobei das Softwareprogrammprodukt Softwarecode-Teile aufweist, die in einen Speicher eines Prozessors geladen werden können und die von einem Prozessor ausgeführt werden können, derart, dass sie, wenn sie ausgeführt werden, den Prozessor dazu veranlassen konfiguriert zu werden, das Verfahren nach einem der Ansprüche 1 bis 7 zu implementieren.

## Revendications

1. Méthode d'estimation de l'altitude d'une cible (13) comprenant :

   • l'acquisition de premières grandeurs indicatives de mesures de portée bistatique associées à une cible (13) et réalisées sur la base de signaux de radiofréquence reçus par un capteur radar passif (12) et transmises par au moins trois émetteurs d'opportunité (11) ;
   • l'acquisition de secondes grandeurs indicatives de mesures de taux de portée bistatique associées à la cible (13) et réalisées sur la base desdits signaux de radiofréquence reçus par ledit capteur radar passif (12) et transmises par les au moins trois émetteurs d'opportunité (11) ;
   • l'estimation d'un état cinématique bidimensionnel de la cible (13) sur la base des premières et des secondes grandeurs, ledit état cinématique bidimensionnel incluant

     - une position bidimensionnelle de la cible (13) définie par deux coordonnées exprimées dans un système de références polaires en termes de portée et d'azimut, ou dans un système de références cartésiennes correspondant, et
     - une vitesse bidimensionnelle de la cible (13) définie par deux composantes exprimées dans le système de références polaires en termes de portée et d'azimut, ou dans le système de références cartésiennes correspondant ; et

     • l'estimation d'un état cinématique tridimensionnel incluant l'altitude et la composante d'élévation de la vitesse de la cible (13) sur la base de l'état cinématique bidimensionnel de la cible (13) et des premières et des secondes grandeurs, ledit état cinématique tridimensionnel comprenant

     - une position tridimensionnelle de la cible (13) définie par trois coordonnées exprimées dans le système de références polaires, ou dans le système de références cartésiennes correspondant, et
     - une vitesse tridimensionnelle de la cible (13) définie par trois composantes exprimées dans le système de références polaires, ou dans le système de références cartésiennes correspondant ;

   **caractérisée en ce que** :

     • chacun des au moins trois émetteurs d'opportunité (11) émet à l'aide d'une fréquence porteuse respective qui est dans la bande FM et est différente des fréquences porteuses utilisées par les autres émetteurs d'opportunité (11) ; et
     • l'état cinématique tridimensionnel de la cible (13) est estimé de manière à minimiser une fonction relative à au moins les secondes grandeurs ;

   dans laquelle ladite fonction est représentative d'une distance statistique entre un modèle mathématique du taux de portée bistatique et les secondes grandeurs, ou est une fonction de coût qui comprend :

     • une première contribution indicative d'une erreur d'un modèle de mesure à un instant courant et à des instants antérieurs audit instant courant et inclus dans une fenêtre de temps ayant une durée prédéterminée ;
     • une deuxième contribution indicative d'une erreur d'un modèle de mouvement à l'instant courant et à des instants antérieurs audit instant courant et inclus dans ladite fenêtre de temps ; et
     • une troisième contribution indicative d'une erreur d'estimation relative à une distance entre l'état cinématique tridimensionnel de la cible (13) au premier instant inclus dans ladite fenêtre de temps et l'état cinématique tridimensionnel de la cible (13) à un instant antérieur audit premier instant inclus dans ladite fenêtre de temps ;

   dans laquelle le modèle de mesure concerne l'état cinématique tridimensionnel de la cible (13) à un instant générique et les premières et secondes grandeurs au même instant générique ;
   et dans laquelle le modèle de mouvement concerne l'état cinématique tridimensionnel de la cible (13) à un instant générique et l'état cinématique tridimensionnel de la cible (13) à un instant antérieur audit instant générique.

2. Méthode selon la revendication 1, dans laquelle ladite fonction de coût comprend une addition de la première contribution, de la deuxième contribution et de la troisième contribution.

**3.** Méthode selon la revendication 1 ou 2, dans laquelle l'estimation d'un état cinématique tridimensionnel de la cible (13) comprend l'estimation récursive d'un état tridimensionnel de la cible (13) à un instant courant de manière à minimiser ladite fonction de coût.

**4.** Méthode selon l'une quelconque des revendications 1 à 3, comprenant en outre :

• l'exécution d'une méthode de filtre à particules sur la base de l'état cinématique bidimensionnel de la cible (13) et des premières et secondes grandeurs de manière à estimer un état cinématique tridimensionnel initial de la cible (13), qui comprend une position initiale de la cible (13) définie par trois coordonnées exprimées dans le système de références polaires, ou dans le système de références cartésiennes correspondant, et une vitesse initiale de la cible (13) définie par trois composantes exprimées dans le système de références polaires, ou dans le système de références cartésiennes correspondant ;

et dans laquelle la première erreur d'estimation utilisée pour estimer l'état cinématique tridimensionnel de la cible (13) est déterminée sur la base de l'état cinématique tridimensionnel initial estimé.

**5.** Méthode selon l'une quelconque des revendications précédentes, dans laquelle la fonction est minimisée au moyen d'une méthode des moindres carrés.

**6.** Méthode selon l'une quelconque des revendications précédentes, comprenant en outre :

• le filtrage, avec un filtre de Kalman, des mesures de portée bistatique associées à la cible (13) et réalisées sur la base des signaux de radiofréquence reçus par le capteur radar passif (12) et transmis par les au moins trois émetteurs d'opportunité (11), obtenant ainsi les premières grandeurs ; et
• le filtrage, avec un filtre de Kalman, des mesures de taux de portée bistatique associées à la cible (13) et réalisées sur la base des signaux de radiofréquence reçus par le capteur radar passif (12) et transmis par les au moins trois émetteurs d'opportunité (11), obtenant ainsi les secondes grandeurs ;

et dans laquelle l'estimation d'un état cinématique bidimensionnel de la cible (13) comprend :

• l'application d'une technique de multilatération aux premières grandeurs de manière à déterminer des informations de position concernant la cible (13) ; et
• l'application d'une technique de poursuite aux informations de position et aux premières et secondes grandeurs de manière à estimer l'état cinématique bidimensionnel de la cible (13).

**7.** Méthode selon l'une quelconque des revendications précédentes, dans laquelle chaque émetteur d'opportunité (11) occupe une position respective qui est différente des positions des autres émetteurs d'opportunité (11).

**8.** Processeur configuré pour implémenter la méthode revendiquée dans l'une quelconque des revendications précédentes.

**9.** Système de radar comprenant un processeur et au moins un capteur radar passif mutuellement couplés, ledit processeur étant configuré pour implémenter la méthode revendiquée dans l'une quelconque des revendications 1 à 7.

**10.** Produit de programme logiciel comprenant des portions de code logiciel chargeables dans une mémoire d'un processeur, exécutables par ledit processeur, de façon à amener, une fois exécutées, ledit processeur à devenir configuré pour implémenter la méthode revendiquée dans l'une quelconque des revendications 1 à 7.

$r_{Tx}$

$r_{Rx}$

$L$

# Fig. 1

Bistatic range and bistatic Doppler measurements

```
┌─────────────────────────────────────┐
│  Estimation of two-dimensional       │
│  kinematic state of the target       │
└─────────────────────────────────────┘
```

21

$$\left(\hat{x},\ \hat{y},\ \hat{\dot{x}},\ \hat{\dot{y}}\right)$$

```
┌─────────────────────────────────────┐
│  Optimization procedure for          │
│  estimating altitude of the target   │
└─────────────────────────────────────┘
```

22

$$\left(\hat{x},\ \hat{y},\ \hat{z},\ \hat{\dot{x}},\ \hat{\dot{y}},\ \hat{\dot{z}}\right)$$

# Fig. 2

Fig. 3

Bistatic range and bistatic range rate measurements

41 — Estimation of two-dimensional kinematic state of the target

$$\left(\hat{x},\ \hat{y},\ \hat{\dot{x}},\ \hat{\dot{y}}\right)$$

42 — Particle filter algorithm for estimating an initial three-dimensional kinematic state of the target

43 — MH tracker recursively estimating the three-dimensional kinematic state of the target

$$\left(\hat{x},\ \hat{y},\ \hat{z},\ \hat{\dot{x}},\ \hat{\dot{y}},\ \hat{\dot{z}}\right)$$

Fig. 4

Fig. 5

| Standard deviation of bistatic range rate measurements | Time |
|---|---|
| 3 m/s | 60 s |
| 1 m/s | 35 s |
| 0.5 m/s | 20 s |
| 0.2 m/s | 10 s |

Fig. 6

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 200200539982 A1

- US 5525995 A

**Non-patent literature cited in the description**

- Multistatic target tracking for non-cooperative illumination by DAB/DVB-T. **M. DAUN ; W. KOCH.** Radar Conference 2008. 26 May 2008, 1-6